# EUROPÄISCHE PATENTSCHRIFT

(11) **EP 2 193 066 B1**
(45) Veröffentlichungstag und Bekanntmachung des Hinweises auf die Patenterteilung: **21.09.2011**
(21) Anmeldenummer: 08785065.7
(22) Anmeldetag: 25.07.2008
(51) Int. Cl.: B62J 11/00

(54) **KOPPELVORRICHTUNG ZUM LÖSBAREN ANBRINGEN VON ZUBEHÖR AN EINEM FAHRRAD**
COUPLING DEVICE FOR RELEASABLY ATTACHING ACCESSORIES TO A BICYCLE
DISPOSITIF D'ACCOUPLEMENT POUR LA FIXATION AMOVIBLE D'ACCESSOIRES SUR UN CYCLE

(30) Priorität: 21.09.2007 DE 202007013296 U; 05.12.2007 DE 202007016987 U; 16.02.2008 DE 202008002164 U; 20.02.2008 DE 202008002325 U; 05.03.2008 DE 202008003149 U; 07.05.2008 DE 202008006275 U
(43) Veröffentlichungstag der Anmeldung: 09.06.2010
(73) Patentinhaber: Mühlberger GmbH, 50677 Köln (DE)
(72) Erfinder: MÜHLBERGER, Alois, 50677 Köln (DE)
(74) Vertreter: Fleck, Hermann-Josef
(86) Internationale Anmeldenummer: PCT/EP2008/006112
(87) Internationale Veröffentlichungsnummer: WO 2009/039910

(56) Entgegenhaltungen:
- WO-A-03/084805
- WO-A-2005/051711
- BE-A- 332 169
- DE-A1- 4 334 315
- DE-A1- 19 713 704
- DE-U1- 9 418 636
- DE-U1- 20 214 809
- DE-U1- 29 507 577
- DE-U1- 29 704 283
- DE-U1- 29 914 421
- GB-A- 976 555
- US-A- 3 007 743
- US-A- 4 830 239
- US-A- 5 427 285
- US-A- 5 619 815
- US-B1- 6 186 383

## Beschreibung

Die Erfindung bezieht sich auf eine Koppelvorrichtung zum lösbaren Anbringen von Zubehör an einem Fahrrad mit einem an dem Zubehör befestigten oder befestigbaren Koppelteil, das einen durch Einschieben ankoppelbaren Halteabschnitt aufweist, und mit einer zu dessen Aufnahme ausgebildeten Kupplungseinheit, die an dem Fahrrad fest integriert ist und einen Aufnahmeabschnitt zum Einschieben des Halteabschnittes aufweist.

Die Abb.4 der DE 299 14 421 U1 zeigt ein Fahrrad gemäβ dem Oberbegriff von Anspruch 1 mit Koppelvorrichtungen im Bereich einer Lenkstange mit einem über eine Befestigungsvorrichtung an der Lenkstange befestigten Träger und einem daran über einen Koppelteil anbringbaren Fahrtmessgerät.

An einem Fahrrad wird abnehmbares Zubehör, wie Behältnisse und andere Gepäcktragvorrichtungen, Fahrradcomputer, abnehmbare Lampen und dgl. mittels an dem Zubehör angebrachter Koppelteile angekoppelt, die häufig als an einem Fahrradbestandteil eingehängte Hakenelemente ausgestaltet sind. Dabei gibt es eine große Vielfältigkeit von Koppelelementen und Anbringarten.

Eine Koppelvorrichtung der eingangs genannten Art ist in der WO 2008/006577 A1 angegeben. Bei dieser bekannten Koppelvorrichtung ist an einem Lenkervorbau, nämlich an dessen vorkragendem Abschnitt, eine Kupplungseinheit mit einem Aufnahmeabschnitt integriert, in den ein daran angepasster Halteabschnitt eines an einem Zubehör, wie z. B. einem Computer oder Behältnis, angebrachten Koppelteils einschiebbar ist.

Eine weitere Koppelvorrichtung zum Anbringen eines Zubehörs an dem Vorbau eines Fahrrads ist in der FR 2 494 659 A1 gezeigt. Der Befestigungsabschnitt dieser Koppelvorrichtung ist zum Ankoppeln elektrisch betriebener Zubehörteile ausgestaltet.

Am Gepäckträger werden Fahrradtaschen häufig mittels Haken und Schnallen oder Bändern mit Klettverschluss angebracht. Ähnliche Befestigungsmittel für solches Zubehör finden sich auch zur Verbindung im Lenkerbereich des Fahrrads.

Der Erfindung liegt die Aufgabe zugrunde, eine Koppelvorrichtung der eingangs genannten Art bereit zu stellen, mit der bei einfacher Handhabung vielfältige Koppelmöglichkeiten geboten werden.

Diese Aufgabe wird mit den Merkmalen des Anspruches 1 gelöst. Hierbei ist vorgesehen, dass an mehreren Stellen des Fahrrads jeweils gleiche Kupplungseinheiten fest integriert sind und dass der mindestens eine Koppelteil an verschiedenen Arten von Zubehör angebracht oder anbringbar ausgestaltet ist.

Mit diesen Maßnahmen werden vielfältige, stabile und eindeutige Ankoppelmöglichkeiten für Zubehör unterschiedlicher Art und/oder an unterschiedlichen Stellen des Fahrrads geboten. Bei stets gleicher Ausbildung von Koppelteil und Kupplungseinheit besteht dabei z. B. auch die Möglichkeit, ein bestimmtes Zubehör an unterschiedlichen Stellen des Fahrrads in gleicher Weise anzubringen.

Vorteilhafte Ausgestaltungen sind in den Unteransprüchen angegeben.

Die Ausgestaltung der Koppelvorrichtung in der Weise, dass die Kupplungseinheiten an einem Steuerrohr, einer Fahrradgabel, einem Unterrohr des Fahrradrahmens, einem Oberrohr des Fahrradrahmens, einer Sattelstütze, einem Sattelstützenrohr, einem Gepäckträgerteil oder einer an dem Gepäckträger angebrachten Halterung oder an mehreren dieser Fahrradgrundbestandteile integriert ausgebildet sind, bietet verschiedene vorteilhafte Ankopplungsmöglichkeiten an unterschiedlichen Positionen des Fahrrads. Hierbei besteht eine günstige Ausgestaltung darin, dass eine zusätzliche Kupplungseinheit an einem Lenkervorbau des Fahrrads integriert ausgestaltet ist.

Eine sichere, einfach zu bedienende Kopplung ergibt sich dadurch, dass der Koppelteil ein Verriegelungselement und die Kupplungseinheit eine zu diesem komplementäre Verriegelungsaufnahme aufweisen und dass das Verriegelungselement und die Verriegelungsaufnahme selbsttätig miteinander in Eingriff treten, wenn der Koppelteil und die Kupplungseinheit vollständig ineinander geschoben werden.

Eine zuverlässige, sichere Funktion wird dabei dadurch erreicht, dass das Verriegelungselement und die Verriegelungsaufnahme beim Ineinanderschieben des Koppelteils und der Kupplungseinheit durch Federkraft ineinander schnappen und zum Aufheben der Verriegelung das Verriegelungselement und/oder die Verriegelungsaufnahme eine Handhabe aufweist/aufweisen.

Vorteilhafte Ausgestaltungsvarianten zur Ausrüstung eines Zubehörs mit einem Koppelteil bestehen darin, dass der mindestens eine Koppelteil mittels mindestens einer Schraubverbindung oder einer Nietverbindung, einer Schweiß- oder Lötverbindung, einer Schelle, einer Klebeverbindung, einer Klettverbindung, einer Rastverbindung, einer Schnalle oder vermittels einer Tragplatte (41) an dem Zubehör angebracht oder anbringbar ist.

Die Ausrüstung des Fahrrads mit Kupplungseinheiten kann günstig dadurch vorgenommen werden, dass die mindestens eine Kupplungseinheit mittels mindestens einer Nietverbindung, einer Schweiß- oder Lötverbindung, einer Klebeverbindung oder vermittels einer Trageeinheit an dem Fahrrad fest integriert angebracht ist.

Die Kopplung insbesondere auch eines ausgedehnteren Zubehörs wird ferner dadurch begünstigt, dass der Koppelteil und die Kupplungseinheit in ihrem ineinander geschobenen Zustand zusätzlich mittels einer Permanentmagnethalterung gesichert sind.

Dabei bestehen vorteilhafte Ausgestaltungsvarianten darin, dass die Permanentmagnethalterung einen von dem Koppelbereich von Koppelteil und Kupplungseinheit entfernt positionierten Permanentmagneten an dem Zubehör oder Fahrrad einerseits und ein mit diesem kraftgekoppeltes magnetisches oder magnetisierbares Gegenelement an dem Fahrrad oder Zubehör andererseits aufweist.

Eine weitere günstige Ausgestaltung der Erfindung besteht darin, dass das Zubehör ein Behältnis ist, dass sowohl an einer Wandseite als auch an einer Bodenseite des Behältnisses ein Koppelteil angebracht ist und dass das Behältnis mit dem wandseitigen Koppelteil an einer Sattelstütze oder einem Sattelstützenrohr gekoppelt ist und an dem bodenseitigen Koppelteil ein Schutzblech mit einer Kupplungseinheit angekoppelt ist.

Die genannten Maßnahmen ergeben vielfältige Kombinationsmöglichkeiten von unterschiedlichem Zubehör und Positionierung an einem Fahrrad, mit stets gleichen Koppelelementen mit sicherer Funktion bei einfacher Handhabung.

Die Erfindung wird nachfolgend anhand von Ausführungsbeispielen unter Bezugnahme auf die Zeichnungen näher erläutert. Es zeigen:
- Fig. 1A: ein Koppelteil für Zubehör in perspektivischer Darstellung,
- Fig. 1B: das Koppelteil nach Fig. 1A in seitlicher Ansicht,
- Fig. 1C: eine andere Ausführungsform des Koppelteils in Frontansicht in schematischer Darstellung,
- Fig. 1D: das Koppelteil nach Fig. 1C in seitlicher Ansicht,
- Fig. 1E: eine Kupplungseinheit zum Anbringen an einem Fahrradbestand- teil in offener Ausführung in Draufsicht,
- Fig. 1 F: eine andere Ausführungsform einer Kupplungseinheit mit ge- schlossenem Aufnahmeabschnitt in Draufsicht,
- Fig. 2A: einen Fahrradrahmen mit angebrachtem Gepäckträger, Vorbau, Fahrradgabel und Sattelstütze mit an verschiedenen Positionen angeordneten Kupplungseinheiten,
- Fig. 2B: eine in einem Schellenteil des Fahrrads integrierte Kupplungs- einheit,
- Fig. 3A: eine Kupplungseinheit an einem Fahrradrahmen in fest integrierter Ausgestaltung,
- Fig. 3B: eine in einem Fahrradrahmen eingebaute fest in- tegrierte Kupplungseinheit in geschlossener Ausführung,
- Fig. 3C: eine weitere in einem Fahrradrahmen eingebaute fest integrierte Kupplungseinheit in offener Ausführung,
- Fig. 4: an einem Gepäckträger eines Fahrrades angebrachte Kupp- lungseinheiten,
- Fig. 5: ein an einer Fahrradtasche angebrachtes Koppelteil,
- Fig. 6: ein an einem Gepäckträger eines Fahrrads anbringbares Halte- rungssystem mit mehreren Kupplungseinheiten und einem er- gänzenden Halteteil,
- Fig. 7: eine andere Ausführungsform eines an einem Fahrradgepäck- träger anbringbaren Halterungssystems mit mehreren darin in- tegrierten Kupplungseinheiten und einem ergänzenden Halteteil,
- Fig. 8: eine mit einem Koppelteil und einem zusätzlichen Halteteil aus- gerüstete Tragplatte und ein die Tragplatte aufnehmendes Be- hältnis in perspektivischer Ansicht sowie in seitlicher Ansicht,
- Fig. 9: ein weiteres Ausführungsbeispiel einer Kupplungseinheit mit Be- festigungselementen zum Anbringen an Fahrradbestandteilen,
- Fig. 10: eine an einer Klemmschelle ausgebildete Kupplungseinheit in Draufsicht und in perspektivischer Ansicht,
- Fig. 11: ein an einem Zubehör mit Befestigungsbügel anzubringendes Koppelteil in perspektivischer Darstellung,
- Fig. 12: eine Fahrradtasche mit an einer Seitenwand angebrachtem Kop- pelteil und in einer Bodenwand angekoppeltem Schutzblech in seitlicher, teilweise perspektivischer Ansicht,

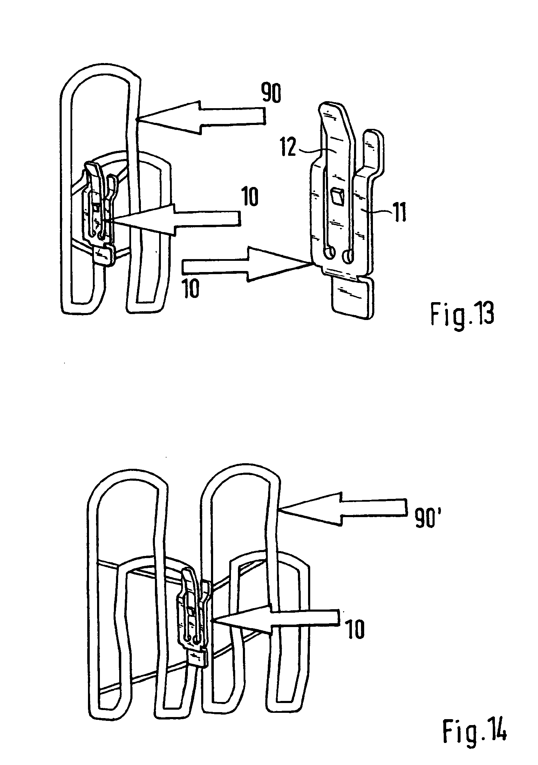

- Fig. 13: ein an einem Flaschenhalter angebrachtes Koppelteil in perspek- tivischer Ansicht und
- Fig. 14: ein an einem doppelten Flaschenhalter angebrachtes Koppelteil in perspektivischer Ansicht.

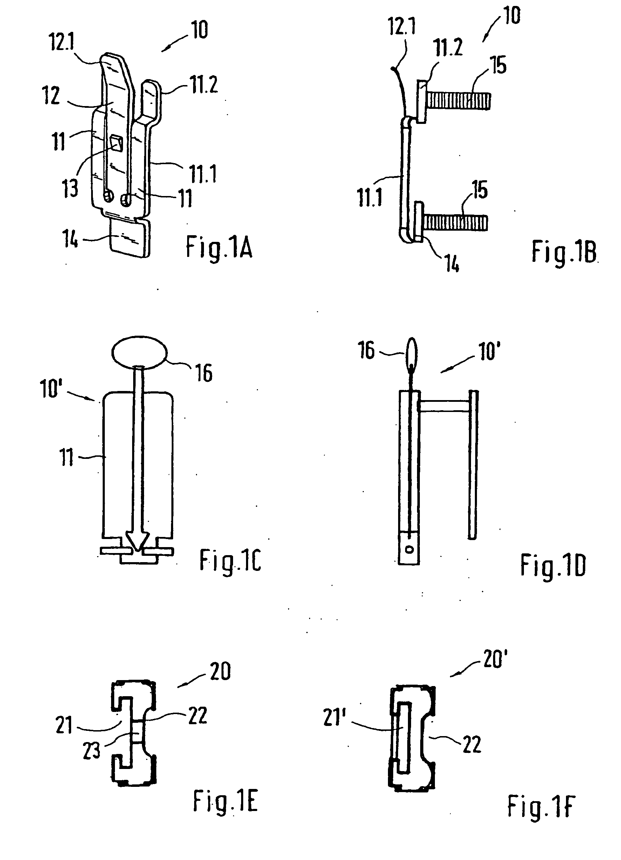

Die Fig. 1A und 1B zeigen in perspektivischer Ansicht bzw. in Seitenansicht ein Koppelteil 10 zum Anbringen an einem Fahrradzubehör, wie z. B. Behältnissen, etwa einer Tasche oder eines Fahrradkorbes, Flaschen mit oder ohne Träger, einer Pumpe, einer Lichteinheit, einem Fahrrad-Computer oder dgl., das in eine darauf abgestimmte Kupplungseinheit 20 gemäß Fig. 1E einschiebbar und darin verriegelbar ist. Eine andere Ausführungsform eines Koppelteils 10' ist in den Fig. 1C von vorne und 1 D von der Seite gezeigt. Diese alternative Ausgestaltung ist mit einer anderen, entsprechend angepassten Kupplungseinheit 20' gemäß Fig. 1F durch Einschieben koppelbar. Die Kupplungseinheiten 20 gemäß Fig. 1E und 20' gemäß Fig. 1F unterscheiden sich dadurch, dass erstere (nach Fig. 1 E) offen und letztere (nach Fig. 1 F) geschlossen ausgestaltet sind.

Wie die Fig. 1A und 1B zeigen, ist das beispielsweise als Stanz-/Biegeteil aus einer flachen Blechplatte hergestellte oder aber aus einem Kunststoffformteil gefertigte Koppelteil 10 mit seitlichen, parallel zueinander verlaufenden Halteabschnitten 11 versehen, die an ihren schmalen, in Einführrichtung verlaufenden Längsrändern Führungsabschnitte 11.1 zum Einführen in seitliche Nuten eines im Querschnitt T-förmigen Aufnahmeabschnitts 21 der Kupplungseinheit 20 gemäß Fig. 1E einschiebbar und darin passgenau gehalten sind. Ein zwischen den seitlichen Halteabschnitten 11 angeordneter zentraler Verriegelungsabschnitt 12 ist zungenartig ausgestaltet und durch seitliche Einschnitte von den Halteabschnitten 11 getrennt und nur an seinem einen schmalen Ende zusammenhängend mit dem Material der Halteabschnitte 11 verbunden, wobei am Ende der Einschnitte jeweilige Bohrungen eingebracht sind, um eine federnde Anbindung des Verriegelungsabschnittes 12 bezüglich seiner Funktionseigenschaften zu verbessern. An seinem anderen, dem freien Ende ist der Verriegelungsabschnitt 12 nach etwas aus seiner Ebene abgebogen, um eine Handhabe 12.1 für eine einfache Schwenkbetätigung zum Entriegeln des Verriegelungsabschnittes 12 zu bilden. Auf seiner einen flachen Seite weist der Verriegelungsabschnitt 12 ein gegenüber seiner Ebene vorstehendes oder aber eingesenktes Verriegelungselement 13 auf, das im eingeschobenen Zustand des Koppelteils 10 in die Kupplungseinheit 20 an einer entsprechend positionierten und in seiner Größe und Form zumindest weitgehend angepassten vertieften oder vorstehenden Verriegelungsaufnahme 23 in eine Verriegelungsstellung einschnappt und darin verrastend ausgebildet sein kann. Dadurch wird der Koppelteil 10 in der Kupplungseinheit 20 im angekoppelten Zustand des Zubehörs an dem Fahrrad stabil und sicher gehalten.

Zum eindeutigen Positionieren des Koppelteils 10 in der Kupplungseinheit 20 in seiner vollkommen eingeschobenen Stellung ist der Koppelteil 10 an seinen freien Endbereichen Z-förmig zweimal um ca. 90° abgebogen, so dass sich ein Absatz ergibt, mit dem die Halteabschnitte 11 auf der Oberseite oder einem entsprechend ausgebildeten Gegenabschnitt der Kupplungseinheit 20 in Anlage kommen. Einführseitig ist der Koppelteil 10 mit einem zungenartigen Einführabschnitt 14 versehen, der in seiner Breite an die Öffnungsseite des Aufnahmeabschnittes 21 der Kupplungseinheit 20 angepasst und ebenfalls Z-förmig durch zweimalige Abbiegung abgebogen ist, auf entsprechender Seite wie die Begrenzungsabschnitte 11.2 der beiden Halteabschnitte 11. Im eingeschobenen Zustand liegt also der Einführabschnitt 14 im Öffnungsbereich des Aufnahmeabschnittes 21, wobei der durch die zweimalige Abbiegung gebildete Absatz ebenfalls zur Anlage in dem in Einführrichtung unteren Teil des Aufnahmeabschnittes 21 bei entsprechender Ausbildung desselben dienen kann und zusammen mit den Führungsrändern 11.1 der Halterabschnitte 11 zu einer eindeutigen Führung und einem sicheren Sitz beiträgt.

Um den Koppelteil 10 an dem Zubehör anzubringen, weist er z. B. Befestigungselemente 15 in Form von Schrauben oder Nieten oder alternativ oder zusätzlich ein Klettverbindungsteil oder ein Befestigungsband oder Ösen für ein Befestigungsband auf.

Bei dem Ausführungsbeispiel nach den Fig. 1C und 1D ist das Koppelteil 10' so ausgestaltet, dass es mit einem Schiebeteil mit seitlichen Halteabschnitten 11 in einen auf seiner dem Zubehör zugekehrten Seite geschlossenen Aufnahmeabschnitt 21' der Kupplungseinheit 20' nach Fig. 1F einsetzbar ist, wobei der Einschubteil an seinem in Einschubrichtung liegenden Bereich vollständig frei und lediglich in seinem in Einschubrichtung hinteren Bereich mit dem Zubehör bzw. einer Verbindungseinheit zum Anbringen an dem Zubehör angebunden ist. Mit einem Griffteil 16 kann das Koppelteil 10' aus dem entsprechend angepassten Aufnahmeabschnitt 21' herausgezogen werden. Auch hierbei kann ein Verriegelungselement vorgesehen sein, um den Koppelteil 10' in der Kupplungseinheit 20' in eingeschobenem Zustand selbsttätig zu verriegeln und durch manuelle Betätigung freizugeben.

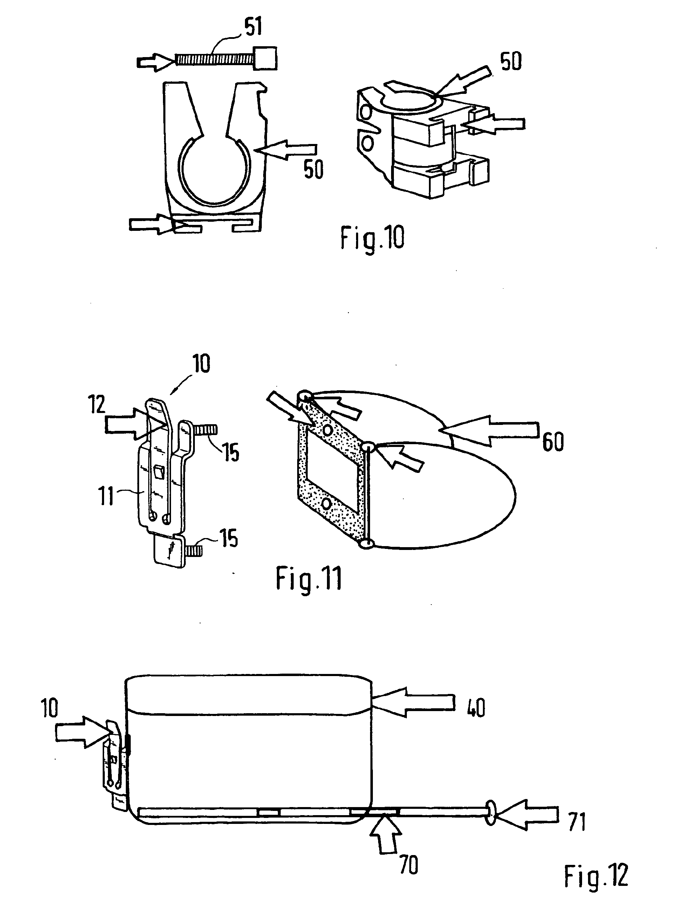

Wie die Fig. 1E und 1F weiter zeigen, ist die Kupplungseinheit 20, 20' auf ihrer von dem Aufnahmeabschnitt 21, 21' abgewandten Seite mit einem Verbindungsabschnitt 22 versehen, über den sie an einem Fahrradbestandteil stabil in Anlage und daran angebracht ist, beispielsweise durch Schweißen, Löten, Kleben oder Nieten, wobei die Klemmschelle 50 nach Fig. 10 nicht zur Erfindung gehört. Erfindungsgemäß ist die Kupplungseinheit 20, 20' fest in dem Fahrradbestandteil, beispielsweise einem Rahmenteil integriert.

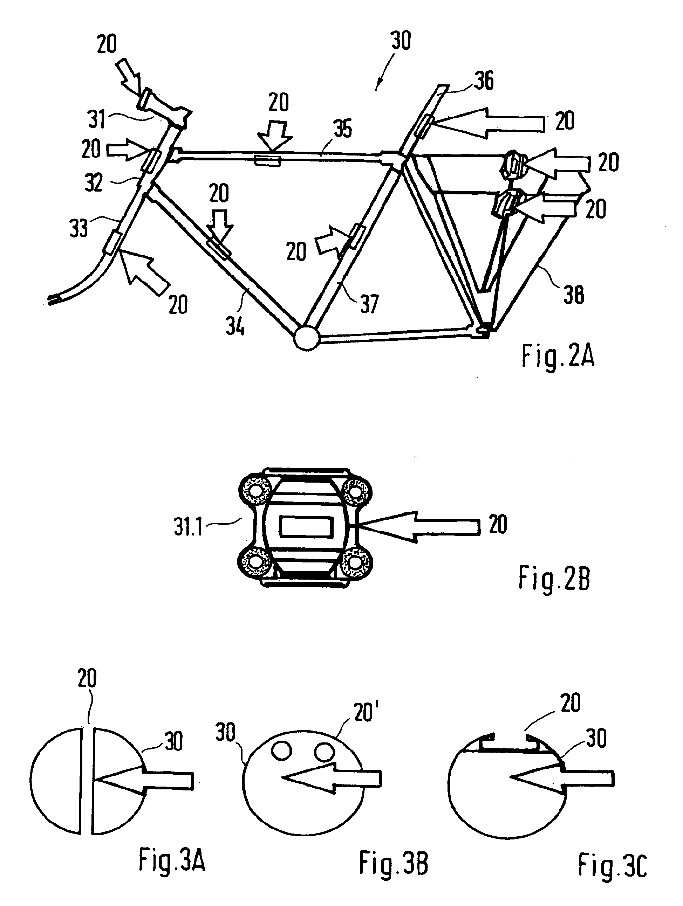

Fig. 2A zeigt verschiedene günstige Anordnungen von Kupplungseinheiten 20 an Bestandteilen eines Fahrrads, insbesondere einem Rahmen 30, der mit einem Vorbau 31, einer Fahrradgabel 33, einer Sattelstütze 36 sowie einem Gepäckträger mit Tragegestänge 38 erweitert ist. Hierbei sind Kupplungseinheiten 20 an dem Vorbau 31, dem Steuerrohr 32, der Fahrradgabel 33, dem Unterrohr 34 des Fahrradrahmens, dem Oberrohr 35 des Fahrradrahmens, der Sattelstütze 36, dem Sattelstützenrohr 37 und dem Traggestänge des Gepäckträgers 38 angebracht, wobei die an dem eigentlichen Fahrradrahmen (aus Steuerrohr 32, Unterrohr 34, Oberrohr 35 und Sattelstützenrohr 37) angebrachten Kupplungseinheiten in diesen Rahmenteilen von vornherein fest integriert sind, so dass sich bestimmte Positionen mit stabiler Anbringung der Kupplungseinheiten 20 oder alternativ 20' ergeben. Des Weiteren können Kupplungseinheiten 20 bzw. 20' auch in der Fahrradgabel 33, dem Vorbau 31, beispielsweise dem vorkragenden Abschnitt desselben, sowie der Sattelstütze 36 fest integriert sein bzw. an dem Gepäckträger 38 herstellerseitig bereits fest angebracht sein. Es ist möglich, ein oder mehrere Kupplungseinheiten 20, 20' von vornherein fest an einem oder mehreren dieser Bestandteile des Fahrrads zu integrieren bzw. fest anzubringen.

Bei einer in Fig. 2B gezeigten Ausgestaltungsvariante ist eine Kupplungseinheit 20 an einem Klemmteil 31.1 des Vorbaus 31, das zum Festlegen einer Lenkstange dient, fest integriert. Bei den Ausführungsbeispielen nach den Fig. 3A und 3C sind offene Ausführungsformen einer Kupplungseinheit 20 an dem Fahrradrahmen 30 von vornherein fest integriert, während Fig. 3B ein Ausführungsbeispiel zeigt, bei dem eine geschlossene Kupplungseinheit 20' in einem Fahrradrahmen integriert ist.

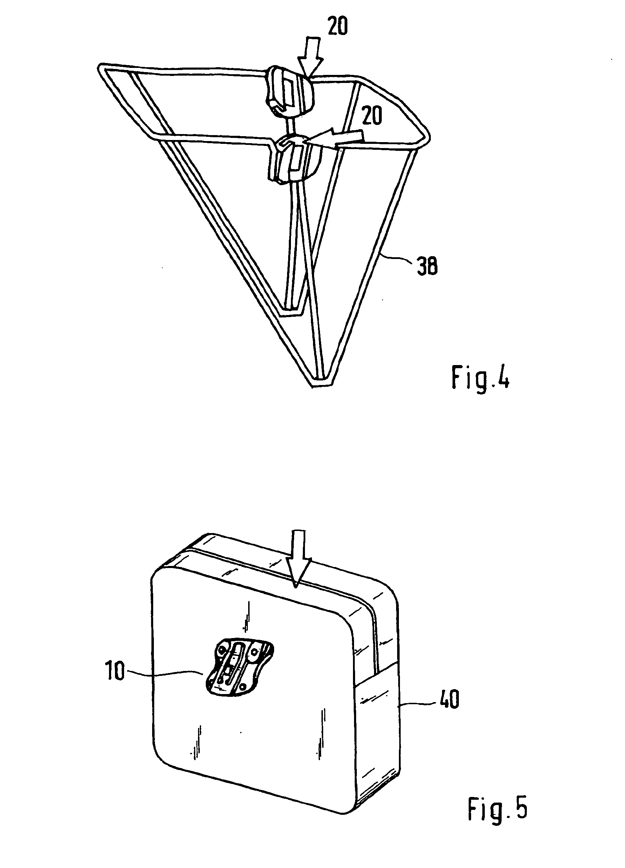

Fig. 4 zeigt einen Gepäckträger 38, bei dem entsprechend Fig. 2A im oberen Übergangsbereich zwischen seitlichen und oberen Traggestängen Kupplungseinheiten 20 angebracht sind, während Fig. 5 ein Behältnis 40 in Form einer Gepäcktasche zeigt, auf dessen einer Seitenwand ein Koppelteil 10 z. B. mittels Nieten auf einer entsprechenden Tragplatte angebracht ist, die mit der Gepäcktasche verbunden wird oder von vornherein verbunden ist.

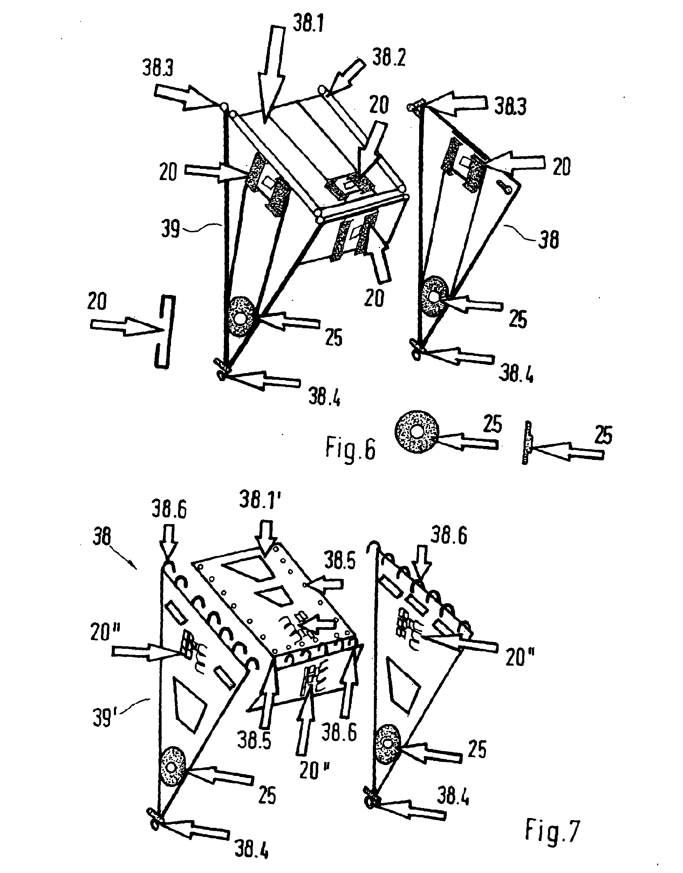

Bei dem Ausführungsbeispiel nach Fig. 6 sind an einem auf einem Gepäckträger anbringbaren Tragsystem mit Seitenteilen 39 und einem Oberteil sowie einem rückseitigen Teil Kupplungseinheiten 20 angebracht, wobei das Tragsystem auf einem Gepäckträger 38 mit einem Oberteil 38.1 anbringbar und z. B. mittels Längsstreben 38.2 und Befestigungsschrauben 38.3 im oberen Gepäckträgerbereich festspannbar ist und ferner mit den Seitenteilen 39 im unteren seitlichen Gepäckträgerbereich mit einem weiteren Befestigungsteil 38.4 zusätzlich festspannbar ist.

Um den Halt eines großflächigen Zubehörteils, beispielsweise einer seitlichen Tasche zu verbessern, sind z. B. in den beiden seitlichen unteren Bereichen der Seitenteile 39 des Tragsystems zusätzliche Halteteile 25 angeordnet, die beispielsweise mittels Magnetkraft und vorteilhaft zusätzlich mittels Formschlusses mit angepassten Halteteilen 17 im vollständig eingeschobenen Zustand des betreffenden Koppelteils 10, 10' in die zugeordnete Kupplungseinheit 20, 20' in lösbare Verbindung treten. Die Halteteile 25, 17 können auch als Clips-, Schnapp- oder Rastverbindung ausgestaltet sein.

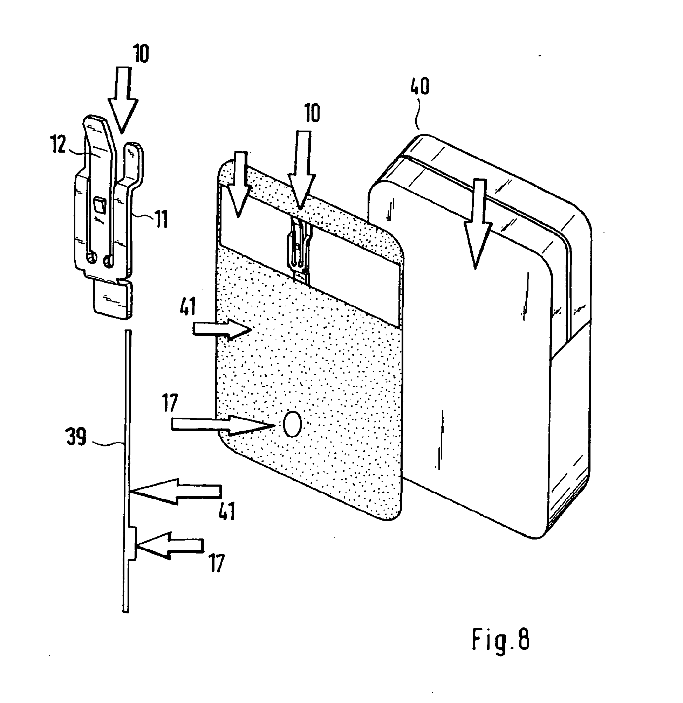

Ein weiteres Tragsystem 39' zeigt Fig. 7, wobei ein Oberteil 38.1' sowie die Seitenteile 39' und ein rückwärtiger Teil plattenförmig ausgebildet sind. An den plattenförmig ausgebildeten Teilen sind Kupplungseinheiten 20" integriert, die vorliegend durch Ausstanzungen und Ausbiegungen ausgestaltet und zum Einschieben eines Koppelteils 10 mit seinen Halteabschnitten 11 ausgebildet sind. Auch hierbei ist in den Plattenteilen im Bereich des Aufnahmeabschnittes 21 eine Verriegelungsaufnahme 23 gebildet. Im unteren Abschnitt der Seitenteile 39' ist wiederum ein Halteteil 25 entsprechend Fig. 6 angeordnet, das vorteilhaft mittels Magnetkraft einen ergänzenden Halt für ein größeres Zubehör, beispielsweise eine Seitentasche, mit einem daran entsprechend positionierten Halteteil 17 (vgl. Fig. 8) bietet. Die Seitenteile 39' sind beispielsweise mittels an ihrem oberen Rand angebrachter Haken 38.6 in an dem zugeordneten Längsrand des Oberteils 38.1 eingebrachten Hakenöffnungen 38.5 eingehängt und mittels Befestigungsteilen 38.4 im unteren seitlichen Gepäckträgerbereich oder einem entsprechenden Rahmenabschnitt des Fahrrads zusätzlich gesichert. Entsprechend ist auch die rückwärtige Platte mittels Haken 38.6 und Hakenöffnungen 38.5 an dem Oberteil 38.1' des Tragsystems angebracht.

Fig. 8 zeigt ein Zubehör bzw. Behältnis 40 in Form einer seitlich an einem Gepäckträger 38 oder Tragsystem mit Seitenteilen 39, 39' anbringbaren Gepäcktasche. An ihrer den Seitenteilen 39, 39' bzw. dem seitlichen Bereich des Gepäckträgers 38 zugekehrten Seitenwand ist das Behältnis 40 mit einer Tragplatte 41 versehen, an der ein Koppelteil 10 in ihrem oberen Bereich angebracht ist, während im unteren Bereich der Tragplatte ein Halteteil 17 angebracht oder ausgebildet ist, das im eingeschobenen Zustand des Koppelteils 10 in eine zugeordnete Kupplungseinheit 20 mit dem Halteteil 25 in Halteverbindung tritt. Vorteilhaft ist zumindest eines der Halteteile 25, 17 mit einem Permanentmagneten versehen, während das gegenüberliegende Halteteil 17 entweder ebenfalls mit einem Permanentmagneten oder mit einem ferromagnetischen Material zum Herstellen einer Verbindung durch Magnetkraft und gegebenenfalls zusätzlich mittels Formschlusses versehen ist.

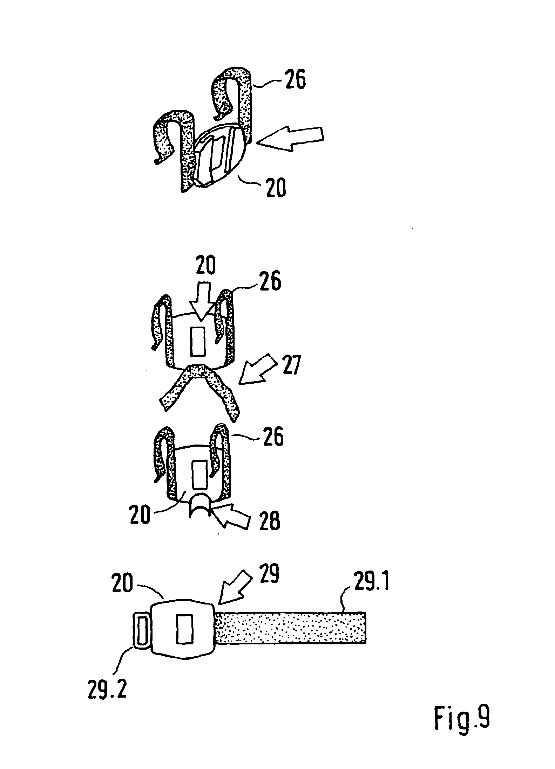

Fig. 9 zeigt verschiedene nicht zur Erfindung gehörige Ausgestaltungen von Befestigungsvorrichtungen für eine Kupplungseinheit 20 zum nachträglichen Anbringen an dem Fahrrad, nämlich eine an der Kupplungseinheit 20 angebrachte Anordnung aus Befestigungshaken 26, die z. B. eine klemmende Anbringung an einem oberen Gepäckträgergestänge ermöglichen, wobei die Haken das Gestänge federnd weitgehend umgreifen und durch eine elastische Federkraft gesichert halten. Die freien Enden der Haken sind nach außen abgebogen, so dass sich eine vorteilhafte Schräge zum leichten, eindeutigen Aufsetzen und Aufdrücken der Befestigungshaken 26 ergibt. Zusätzlich zu den Befestigungshaken 26 können weitere Befestigungsteile an der Kupplungseinheit 20 angebracht sein, beispielsweise ein Befestigungsband mit Schnalle oder Klettverschluss 27 oder eine schnappende oder mit einer Schraube zu sichernde Verbindungsklemme 28. Alternativ oder zusätzlich können an der Kupplungseinheit 20 Halteösen für ein Befestigungsband 29.1 mit einer Öse 29.2 oder Klettverbindungselemente angebracht sein, um die Kupplungseinheit 20 mit einem geeigneten Bestandteil des Fahrrads z. B. auch nur vorübergehend zu verbinden. Fig. 10 zeigt, wie bereits erwähnt, ein ebenfalls nicht zur Erfindung gehöriges Ausführungsbeispiel mit einer Klemmschelle 50 mit daran angebrachter oder integrierter Kupplungseinheit 20, zum Anbringen derselben z. B. an einem Rohr des Fahrradrahmens 30 oder der Sattelstütze 36 vorteilhaft mittels einer Klemmschraube 51. Die Klemmschelle 50 kann dabei gleichzeitig zum Festklemmen des Sattels an der Sattelstütze 36 ausgebildet sein und eine betreffende Klemme ersetzen.

Bei der in Fig. 11 gezeigten Ausgestaltung ist eine Anordnung mit an einem Tragabschnitt angebrachten Befestigungsbügeln 60 vorgesehen, wobei an dem Tragteil ein Koppelteil 10 z. B. mittels schraubbarer Befestigungselemente 15 anbringbar ist. Die Befestigungsbügel 60 können so z. B. an einer Sattelstütze 36 über eine dortige Kupplungseinheit 20 abnehmbar angebracht werden. Die Befestigungsbügel 60 dienen ihrerseits zum Aufnehmen eines oder mehrerer weiterer Zubehörteile oder anderer Gegenstände.

Bei dem Ausführungsbeispiel nach Fig. 12 sind an einer Stirnseite eines Behältnisses 40, beispielsweise einer Tasche oder eines Korbs, ein Koppelteil 10 und im bodenseitigen Bereich des Behältnisses 40 ein Schutzblech, beispielsweise mittels eines am Boden angebrachten weiteren Koppelteils 10 und einer an dem Schutzblech angebrachten Kupplungseinheit 20 angeordnet. Das so angekoppelte Schutzblech 70 kann seinerseits z. B. ausziehbar ausgestaltet und mit einer Halterung 71 an seinem freien Endabschnitt versehen sein, an der z. B. ein Rücklicht anbringbar ist. Mittels des an der Seitenwand angeordneten Koppelteils 10 kann das Behältnis 40 z. B. an einer Sattelstütze 36 vermittels einer dort angebrachten Kupplungseinheit 20 abnehmbar angekoppelt werden. Dann ist das Schutzblech über das Behältnis funktionsgerecht positioniert.

Die beschriebene Koppelvorrichtung ermöglicht bei einheitlichem Aufbau vielfältige Ankopplungsmöglichkeiten.

## Patentansprüche

1. Fahrrad mit Zubehör und einer Koppelvorrichtung zum lösbaren Anbringen verschiedener Arten von Zubehör an dem Fahrrad mit mindestens einem oder mehreren jeweils gleichartigen an den verschiedenen Arten von Zubehör befestigten oder befestigbaren Koppelteilen (10, 10'), die durch Einschieben ankoppelbare seitliche, parallel zueinander verlaufende Halteabschnitte (11) aufweisen, und mit mehreren zur Aufnahme des mindestens einen oder der mehreren gleichartigen Koppelteile (10, 10') ausgebildeten Kupplungseinheiten (20, 20', 20"), die einen im Querschnitt T-förmigen Aufnahmeabschnitt (21, 21') mit seitlichen Nuten zum Einschieben der Halteabschnitte (11) aufweisen, wobei die Halteabschnitte (11) an ihren schmalen, in Einführrichtung verlaufenden Längsrändern Führungsabschnitte (11.1) bilden und in den seitlichen Nuten passgenau gehalten sind, **dadurch gekennzeichnet, dass** an mehreren Stellen des Fahrrads an unterschiedlichen Grundbestandteilen desselben jeweils gleiche Kupplungseinheiten (20, 20', 20") fest integriert sind.

2. Fahrrad nach Anspruch 1,
**dadurch gekennzeichnet,**
**dass** die Kupplungseinheiten (20, 20', 20") an mehreren Fahrradgrundbestandteilen umfassend ein Steuerrohr (32), eine Fahrradgabel (33), ein Unterrohr (34) des Fahrradrahmens, ein Oberrohr (35) des Fahrradrahmens, eine Sattelstütze (36), ein Sattelstützenrohr (37), ein Gepäckträgerteil oder eine an dem Gepäckträger angebrachte Halterung integriert sind.

3. Fahrrad nach Anspruch 2,
**dadurch gekennzeichnet,**
**dass** eine zusätzliche Kupplungseinheit (20, 20', 20") an einem Lenkervorbau (31) des Fahrrads integriert ist.

4. Fahrrad nach einem der vorhergehenden Ansprüche,
**dadurch gekennzeichnet,**
**dass** der mindestens eine Koppelteil (10, 10') ein Verriegelungselement (13) und die Kupplungseinheit (20, 20', 20") eine zu diesem komplementäre Verriegelungsaufnahme (23) aufweisen und
**dass** das Verriegelungselement (13) und die Verriegelungsaufnahme (23) selbsttätig miteinander in Eingriff treten, wenn der Koppelteil (10, 10') und die Kupplungseinheit (20, 20', 20") vollständig ineinander geschoben werden.

5. Fahrrad nach Anspruch 4,
**dadurch gekennzeichnet,**
**dass** das Verriegelungselement (13) und die Verriegelungsaufnahme (23) beim Ineinanderschieben des Koppelteils (10, 10') und der Kupplungseinheit (20, 20', 20") durch Federkraft ineinander schnappen und zum Aufheben der Verriegelung das Verriegelungselement (13) und/oder die Verriegelungsaufnahme (23) eine Handhabe (12.1) aufweist/aufweisen.

6. Fahrrad nach einem der vorhergehenden Ansprüche,
**dadurch gekennzeichnet,**
**dass** der mindestens eine Koppelteil (10, 10') mittels mindestens einer Schraubverbindung oder einer Nietverbindung, einer Schweiß- oder Lötverbindung, einer Schelle, einer Klebeverbindung, einer Klettverbindung, einer Rastverbindung, einer Schnalle oder vermittels einer Tragplatte (41) an dem Zubehör angebracht oder anbringbar ist.

7. Fahrrad nach einem der vorhergehenden Ansprüche,
**dadurch gekennzeichnet,**
**dass** der mindestens eine Koppelteil (10, 10') und die Kupplungseinheiten (20, 20' 20") in ihrem ineinander geschobenen Zustand zusätzlich mittels einer Permanentmagnethalterung gesichert sind.

8. Fahrrad nach Anspruch 7,
**dadurch gekennzeichnet,**
**dass** die Permanentmagnethalterung einen von dem Koppelbereich von Koppelteil (10, 10') und der mit dem mindestens einen Koppelteil (10, 10') zusammenwirkenden Kupplungseinheit (20, 20', 20") entfernt positionierten Permanentmagneten an dem Zubehör oder Fahrrad einerseits und ein mit diesem kraftgekoppeltes magnetisches oder magnetisierbares Gegenelement an dem Fahrrad oder Zubehör andererseits aufweist.

9. Fahrrad nach einem der vorhergehenden Ansprüche,
**dadurch gekennzeichnet,**
**dass** das Zubehör ein Behältnis (40) ist,
**dass** sowohl an einer Wandseite als auch an einer Bodenseite des Behältnisses (40) ein Koppelteil (10, 10') angebracht ist,
**dass** das Behältnis (40) mit dem wandseitigen Koppelteil (10, 10') an einer Sattelstütze (36) oder einem Sattelstützenrohr (37) gekoppelt ist und dass an dem bodenseitigen Koppelteil (10, 10') ein Schutzblech (70) mit einer Kupplungseinheit (20, 20', 20") angekoppelt ist.

## Claims

1. Bicycle with accessories and a coupling device for releasably attaching different types of accessories to the bicycle with at least one or more coupling part(s) (10, 10') which are each identical and which are or can be fastened to the different types of accessories and have lateral, parallel retaining sections (11) which can be coupled on by being pushed in, and with several coupling units (20, 20', 20") designed for receiving the at least one or more identical coupling part(s) (10, 10') having one receiving section (21, 21') with a'T'-shaped cross-section and lateral grooves for pushing in the retaining sections (11), with the retaining sections (11) forming guide sections (11.1) at their narrow longitudinal edges running in the insertion direction and held precisely in the lateral grooves, **characterised in that**, at a plurality of points on the bicycle at different basic components of the same, coupling units (20, 20', 20"), which are each identical, are permanently integrated.

2. Bicycle according to claim 1, **characterised in**
**that** the coupling units (20, 20', 20") are integrated at several basic bicycle components comprising a head tube (32), a bicycle fork (33), a down tube (34) of the bicycle frame, a top tube (35) of the bicycle frame, a seat post (36), a seat post tube (37), a carrier part or a holder attached to the carrier.

3. Bicycle according to claim 2,
**characterised in that** an additional coupling unit (20, 20', 20") is integrated at one stem (31) of the bicycle.

4. Bicycle according to one of the preceding claims,
**characterised in**
**that** the at least one coupling part (10, 10'), a locking device (13) and the coupling unit (20, 20', 20") have a locking receptacle (23) complementary thereto and that the locking element (13) and the locking receptacle (23) engage automatically if the coupling part (10, 10') and the coupling unit (20, 20', 20") are fully pushed into one another.

5. Bicycle according to claim 4,
**characterised in that** the locking element (13) and the locking receptacle (23), when the coupling part (10, 10') and the coupling unit (20, 20', 20") are pushed into one another, snap into one another by spring force and the locking element (13) and/or the locking receptacle (23) has/have a handle (12.1) for unlocking.

6. Bicycle according to one of the preceding claims,
**characterised in that** the at least one coupling part (10, 10') is or can be attached to the accessory by means of at least one screw connection or one riveted joint, one welded or soldered connection, one clamp, one adhesive joint, one Velcro connection, one snap-in connection, one buckle or by means of a supporting plate (41).

7. Bicycle according to one of the preceding claims, **characterised in that** the at least one coupling part (10, 10') and the coupling units (20, 20' 20"), when pushed into one another, are additionally secured by means of a permanent magnet holder.

8. Bicycle according to claim 7,
**characterised in that** the permanent magnet holder has a permanent magnet positioned away from the coupling area of coupling part (10, 10') and the coupling unit (20, 20', 20") interacting with the at least one coupling part (10, 10") at the accessory or bicycle on the one hand and a magnetic or magnetisable counter element force-coupled thereto at the bicycle or accessory on the other hand.

9. Bicycle according to one of the preceding claims, **characterised in that** the accessory is a container (40), that a coupling part (10, 10') is attached to both a wall side and a bottom side of the container (40), that the container (40) is coupled with the wall-side coupling part (10, 10') to a seat post (36) or a seat post tube (37) and that a mudguard (70) is coupled onto the bottom coupling part (10, 10') with a coupling unit (20, 20', 20").

## Revendications

1. Bicyclette équipée d'accessoires et d'un dispositif de rattachement dévolu à l'installation amovible de différents types d'accessoires, sur ladite bicyclette, et comprenant au moins une ou plusieurs pièce(s) de rattachement (10, 10') de type respectivement identique, fixée(s) ou pouvant être fixée(s) aux différents types d'accessoires et munie(s) de zones latérales de maintien (11) qui peuvent être rattachées par insertion coulissante, et s'étendent avec parallélisme mutuel ; et plusieurs unités d'accouplement (20, 20', 20") conçues pour recevoir la pièce de rattachement à présence minimale, ou la pluralité de pièces de rattachement (10, 10') de type identique, et pourvues d'une zone réceptrice (21, 21') de section transversale configurée en T, qui comporte des rainures latérales destinées à l'insertion coulissante des zones de maintien (11), lesquelles zones de maintien (11) forment des zones de guidage (11.1) sur leurs bords longitudinaux étroits s'étendant dans la direction de l'insertion, et sont retenues avec ajustement précis dans lesdites rainures latérales, **caractérisée par le fait que** des unités d'accouplement (20, 20', 20") respectivement identiques sont montées rigidement en plusieurs emplacements de ladite bicyclette, sur différents éléments structurels de base de cette dernière.

2. Bicyclette selon la revendication 1,
**caractérisée par le fait**
**que** les unités d'accouplement (20, 20', 20") sont montées sur plusieurs éléments structurels de base de la bicyclette, comprenant une tubulure de manoeuvre (32), une fourche (33) de ladite bicyclette, une tubulure inférieure (34) du cadre de ladite bicyclette, une tubulure supérieure (35) dudit cadre de la bicyclette, un support (36) de la selle, une tubulure (37) d'appui de ladite selle, une partie du porte-bagages ou un système de retenue implanté sur ledit porte-bagages.

3. Bicyclette selon la revendication 2,
**caractérisée par le fait**
**qu'**une unité additionnelle d'accouplement (20, 20', 20") est montée sur une structure de guidon (31) en avancée sur ladite bicyclette.

4. Bicyclette selon l'une des revendications précédentes,
**caractérisée par le fait**
**que** la pièce de rattachement (10, 10') à présence minimale comporte un élément de verrouillage (13), l'unité d'accouplement (20, 20', 20") présentant un logement de verrouillage (23) complémentaire dudit élément ; et
**que** ledit élément de verrouillage (13) et ledit logement de verrouillage (23) viennent automatiquement en prise, l'un avec l'autre, lorsque ladite pièce de rattachement (10, 10') et ladite unité d'accouplement (20, 20', 20") sont intégralement insérées l'une dans l'autre par coulissement.

5. Bicyclette selon la revendication 4,
**caractérisée par le fait**
**que** l'élément de verrouillage (13) et le logement de verrouillage (23) s'encliquettent l'un dans l'autre sous l'effet d'une force élastique, lors de l'interpénétration coulissante de la pièce de rattachement (10, 10') et de l'unité d'accouplement (20, 20', 20"), ledit élément de verrouillage (13) et/ou ledit logement de verrouillage (23) étant doté(s) d'une poignée (12.1), en vue de supprimer le verrouillage.

6. Bicyclette selon l'une des revendications précédentes,
**caractérisée par le fait**
**que** la pièce de rattachement (10, 10') à présence minimale est, ou peut être installée sur les accessoires à l'aide d'au moins une liaison boulonnée ou d'une liaison rivetée, d'une liaison soudée ou brasée, d'un collier de serrage, d'une liaison collée, d'une liaison auto-agrippante, d'une liaison par déclic, d'une sangle, ou au moyen d'une platine de support (41).

7. Bicyclette selon l'une des revendications précédentes,
**caractérisée par le fait**
**que** la pièce de rattachement (10, 10') à présence minimale, et les unités d'accouplement (20, 20', 20"), sont additionnellement arrêtées dans leur état d'interpénétration coulissante au moyen d'un système de retenue à magnétisation permanente.

8. Bicyclette selon la revendication 7,
**caractérisée par le fait**
**que** le système de retenue à magnétisation permanente comprend d'une part, sur les accessoires ou sur la bicyclette, un aimant permanent placé à distance de la zone de liaison entre la pièce de rattachement (10, 10') et l'unité d'accouplement (20, 20', 20") coopérant avec ladite pièce de rattachement (10, 10') à présence minimale ; et d'autre part, sur ladite bicyclette ou sur lesdites accessoires, un élément complémentaire magnétique, ou magnétisable, couplé à force audit aimant.

9. Bicyclette selon l'une des revendications précédentes,
**caractérisée par le fait**
**que** l'accessoire est un réceptacle (40) ;
**qu'**une pièce de rattachement (10, 10') est implantée aussi bien sur une face formant paroi, que sur une face formant fond dudit réceptacle (40) ;
**que** ledit réceptacle (40) est relié, par la pièce de rattachement (10, 10') située côté paroi, à un support (36) de la selle ou à une tubulure (37) d'appui de ladite selle ; et
**qu'**une tôle de protection (70) est reliée, par une unité d'accouplement (20, 20', 20"), à la pièce de rattachement (10, 10') située côté fond.
